# EUROPEAN PATENT SPECIFICATION

(11) **EP 4 529 333 B1**
(45) Date of publication and mention of the grant of the patent: **09.09.2026**
(21) Application number: 25155232.9
(22) Date of filing: 31.01.2024
(51) Int. Cl.: H04W 72/541, H04W 74/0833

(54) **INTERFERENCE AVOIDANCE FOR PRACH AND RRC MESSAGES**
INTERFERENZVERMEIDUNG FÜR PRACH- UND RRC-NACHRICHTEN
ÉVITEMENT D'INTERFÉRENCE POUR MESSAGES PRACH ET RRC

(30) Priority: 01.02.2023 US 202363482600 P; 07.02.2023 US 202363483619 P; 26.01.2024 US 202418423469
(43) Date of publication of application: 26.03.2025
(62) Document number(s) of the earlier application(s) in accordance with Art. 76 EPC: 24154957.5 / 4 412 377
(73) Proprietor: Mavenir Systems, Inc., Richardson, TX 75081 (US)
(72) Inventor: LEELAHAKRIENGKRAI, Rangsan, Allen, 75013 (US)
(74) Representative: Studio Torta S.p.A.

(56) References cited:
- WO-A1-2015/044871
- US-A1- 2014 313 908
- US-A1- 2016 309 475

## Description

### BACKGROUND OF THE DISCLOSURE

### 1. Field of the Disclosure

The present invention relates to a system and method for optimizing signal to interference plus noise ratio of a 4G or 5G Radio Access Network.

### 2. Description of the Related Art

The Random-Access procedure (e.g., in contention-based mode) in 4G and 5G comprises UE sending message 1 (msg1) requesting the access. The eNB and/or gNB (denoted as eNB/gNB) replies with message 2 (msg2). The UE sends message 3 (msg3), which contains RRC Setup Request, to the eNB/gNB. The eNB/gNB replies with message 4 (msg4) for retention-resolution and RRC Setup. The UE then sends RRC Setup Complete message, which completes the RRC and RACH procedures. When the eNB/gNB wants to release the RRC connection, it sends RRC Release message to the UE.

Field tests have shown that, in the downlink (DL) direction, PRACH msg2 which is the payload in PDSCH (msg2 PDSCH), PRACH message 4, RRC Setup and RRC Release had high failure rate. Further lab tests have shown that the above-listed messages were interfered with by the PDSCH from the nearby cells.

In the uplink direction, the PRACH message 3 (including RRC Setup Request) and RRC Setup Complete were interfered by the Physical Uplink Shared Channel (PUSCH) of the user equipments (UEs) in the nearby cells. It should be noted that PRACH message 1 can be configured so that it is transmitted in the same slot for all cells so as to avoid being interfered with by PUSCH of the nearby cells.

In the current 4G and 5G RA procedure, when the msg2 PDSCH transmission is interfered with, the UE can't decode the message. The UE would time-out the msg1 and retransmit msg1 so that the eNB/gNB can retransmit msg2. The retransmission can be successful if the high interference on the downlink (DL) has dissipated. However, if the interference persists, then msg2 PDSCH would fail again. The UE would repeat msg1 transmissions until the specified maximum number of transmission attempts is reached, at which point the radio access (which term is used synonymously with random access) would be declared a failure, i.e., UE can't access the network.

Although msg2 can be received successfully by the UE, the PRACH msg3 and msg4 could fail due to the UL and/or DL interference from other cells, respectively, resulting in the UE re-starting the PRACH process by sending msg1.

Although msg4 can be received successfully by the UE, the eNB/gNB could still fail to decode the RRC Setup Complete sent by the UE. This causes the RRC Setup procedure to fail, and the UE needs to restart the RRC Setup procedure, which involves triggering the PRACH procedure.

If the UE fails to decode RRC Release sent by the eNB/gNB, the status on both the UE and eNB/gNB becomes mismatched. The UE would be unable to receive any data grant from the eNB/gNB, causing the UE to start a PRACH process which will fail as the eNB/gNB no longer has the UE information or context. The UE eventually declares RRC failure after having spent battery energy on unsuccessful procedures.

Patent application US2014/313908 relates to Radio Resource Management (RRM) in a mobile communication system. More particularly, it is directed to a system and method to reduce signaling overhead related to scheduling of Uplink (UL) and Downlink (DL) radio resources to primarily stationary wireless devices such as, for example, Machine-to-Machine (M2M) devices performing M2M communications.

Patent application WO2015/044871 relates generally to telecommunications and, more particularly (although not necessarily exclusively), to distributed processing among components in a centralized (i.e., cloud) radio access node for coordinating a fronthaul physical layer.

Patent application US2016/309475 discloses base station includes a processing circuit and a transceiver, wherein the processing circuit includes a scheduler configured to schedule a plurality of physical downlink shared channel transmissions in parallel, a first physical downlink shared channel transmission, among the plurality of physical downlink shared channel transmissions, including a random access response for a first user equipment, and the plurality of physical downlink shared channel transmissions being scheduled for transmission to a plurality of user equipment during a random access response window; and wherein the transceiver circuit is configured to transmit the plurality of physical downlink shared channel transmissions to the plurality of user equipment during the random access response window.

However, the above-mentioned issues are not solved.

Therefore, a need exists to provide a system and a method for a cell to avoid creating interference to PRACH msg2, msg3, msg4, RRC Setup Complete and RRC Release transmitted by other cells.

### SUMMARY OF THE DISCLOSURE

The present disclosure provides a system and a method as defined in the annexed claims, in particular to a system and a method for optimizing signal to interference plus noise ration of one of a 4G or 5G Radio Access Network.

### BRIEF DESCRIPTION OF THE DRAWINGS

FIG. 1 is a block diagram of a typical 4G and/or 5G network including CU, DU (which includes MAC Layer, MAC Scheduler and Physical Layer), RU, and UE.
FIG. 2 is a block diagram of an example illustrating that an msg2 PDSCH can be interfered by PDSCH from other sectors of the different site or the same site.
FIG. 3 is an example chart of PRBs and slots illustrating that an msg2 can be interfered by msg2 of other sectors of the same site or different sites.
FIG. 4 is an example chart of PRBs and slots illustrating that an msg2 PDSCH can be interfered by PDSCH of other traffic from other sectors of the same site or different sites.
FIG. 5 illustrates an example embodiment of the present disclosure implementing the locations of Downlink Interference Avoidance region (DL IA region) in sectors Alpha, Beta and Gamma, respectively.
FIG. 6 illustrates an example embodiment of the present disclosure in which msg2, msg4, or RRC Release of different sectors are transmitted in different DL IA region, and DL Scheduler avoids scheduling PDSCH on the PRB of other sectors' DL IA region.
FIG. 7 illustrates an example embodiment of the present disclosure implementing the locations of the slot and PRBs of UL IA region.
FIG. 8 illustrates an example embodiment of the present disclosure implementing the locations of the slot and PRBs of UL IA region when the load is high.
FIG. 9 illustrates an example embodiment of the present disclosure implementing the transmission of msg3 or RRC Setup Complete in the UL IA region.
FIG. 10 illustrates an example embodiment of the present disclosure implementing the transmission of msg3 or RRC Setup Complete in the UL IA region when the load is high (i.e., when there are high number of UE's attempting to access the cell).

### DETAILED DESCRIPTION

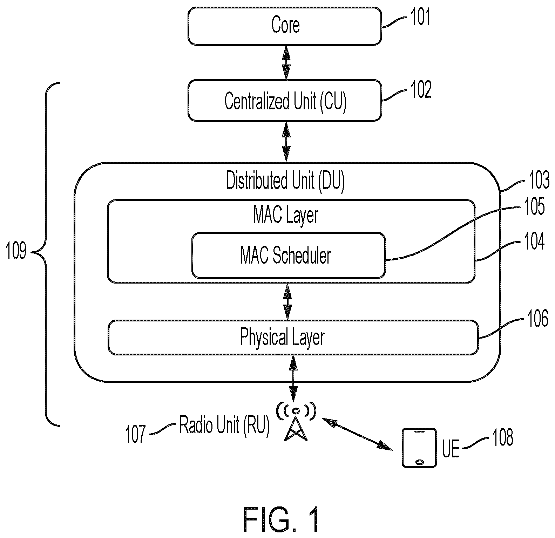

Typical 4G and/or 5G system, which is commonly illustrated in FIG. 1, comprises Core network 101 and Radio Access Network (RAN) 109. RAN 109 comprises at least one Centralized Unit (CU) 102, at least one Distributed Unit (DU) 103, at least one Radio Unit (RU) 107, which RAN 109 is acceded by User Equipment (UE) 108. The DU 103 comprises Medium Access Control (MAC) Layer 104, which in turn houses MAC Scheduler 105 (collectively showing both a downlink (DL) scheduler and an uplink (UL) scheduler) and Physical Layer 106. For the sake of simplicity, RAN 109 will also be referred to as eNB (for 4G) and/or gNB (for 5G).

In one example embodiment, all PRACH msg2 are transmitted on the same PRB at 8 slots after eNB/gNB receives PRACH msg1 at the PRACH opportunity. This repeats every 10ms, for example, and it is configurable in 4G and 5G networks. The 8 slots referenced above is the time it takes for eNB/gNB Layer 1 (Physical Layer) processor (L1) to process msg1, send the result to eNB/gNB Layer 2 (MAC Layer) processor, and for the MAC layer to schedule a msg2. The 8 slots time duration can be reduced with additional optimization. According to an example embodiment, the following conditions are assumed: PRACH opportunities are assumed to be on the same frequency and slot with 10ms periodicity; and msg2 uses 4 PRBs with Modulation and Coding Scheme (MCS) 0 on PDSCH and Control Channel Element (CCE) Aggregate Level (AL) 8 on PDCCH. In an alternative example embodiment, the PRB size of msg2 can be other fixed value as per implementation.

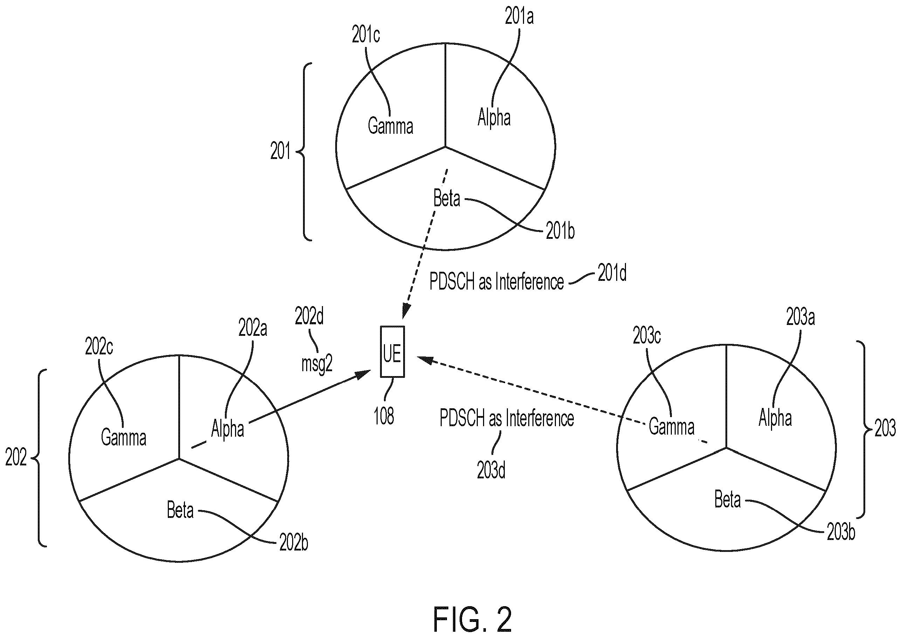

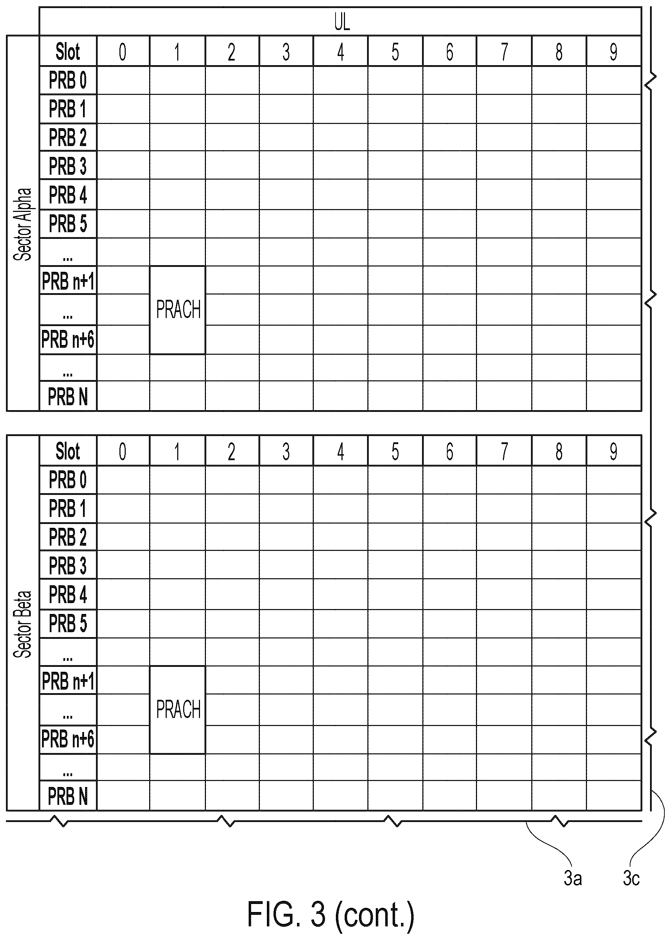

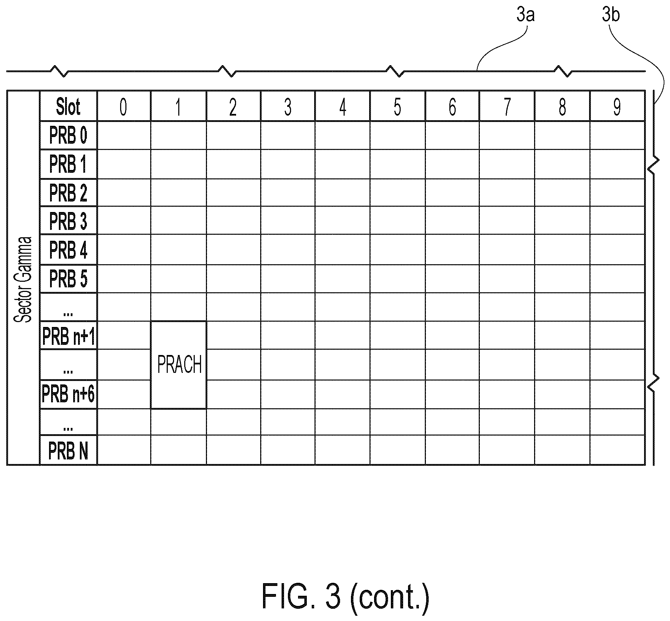

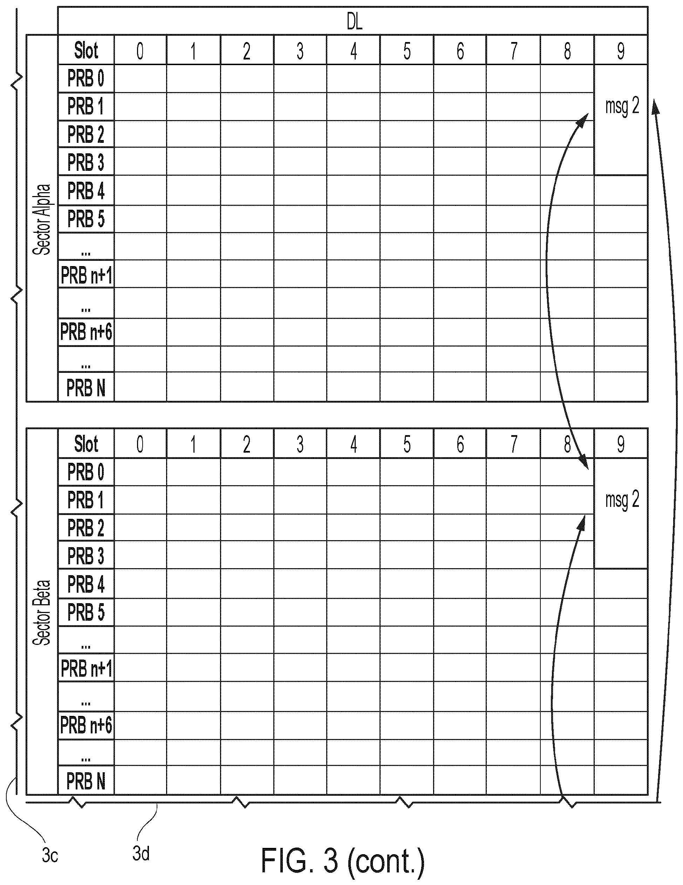

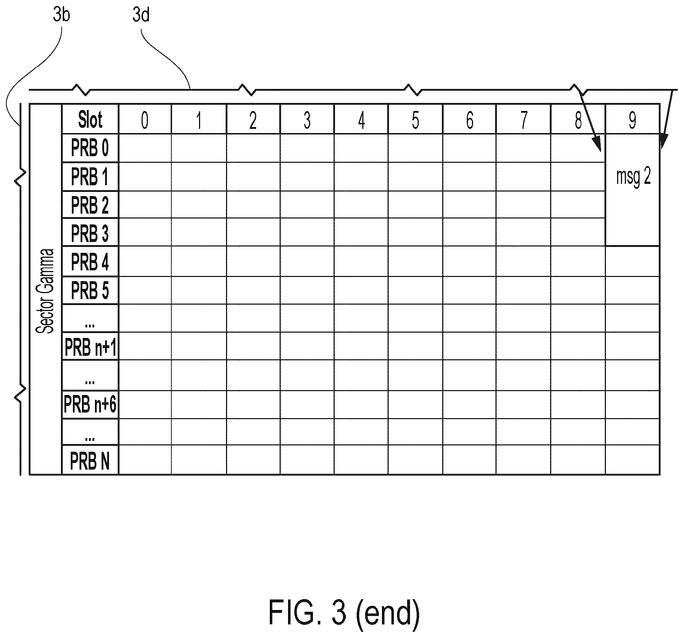

FIG. 2 is a block diagram of an example illustrating that an msg2 PDSCH can be interfered by PDSCH from other sectors of different sites (although not explicitly shown in FIG. 2, PDSCH from other sectors of the same site can also create interference). FIG. 2 illustrates three different cell sites, 201, 202 and 203, each with three different sectors (site 201 contains sector Alpha 201a, sector Beta 201b, and sector Gamma 201c; site 202 contains sector Alpha 202a, sector Beta 202b, and sector Gamma 202c; site 203 contains sector Alpha 203a, sector Beta 203b, and sector Gamma 203c). The example shown in FIG. 2 assumes that PRACH opportunities are configured on the same slots. All msg2 of sectors Alpha, Beta and Gamma of sites 201, 202 and 203 are on PRBs 0-3, and they can interfere with each other as they are transmitting on the same time and frequency. In the example of FIG. 2, msg2 202d of sector Alpha 202a experiences interference from msg2 201d of sector Beta 201b and msg2 203d of sector Gamma 203c. The example interference is also illustrated in FIG. 3, which is an example chart of PRBs and slots showing that an msg2 can be interfered by msg2 of other sectors of different sites or the same site (in FIG. 3, the left side illustrates UL PRACH in slot 1 for all sectors Alpha, Beta and Gamma of the multiple sites (e.g., sites 201, 202 and 203 of FIG. 2), and the right side illustrates DL msg2 on PRBs 0-3 in slot 9 for all sectors Alpha, Beta and Gamma of the multiple sites).

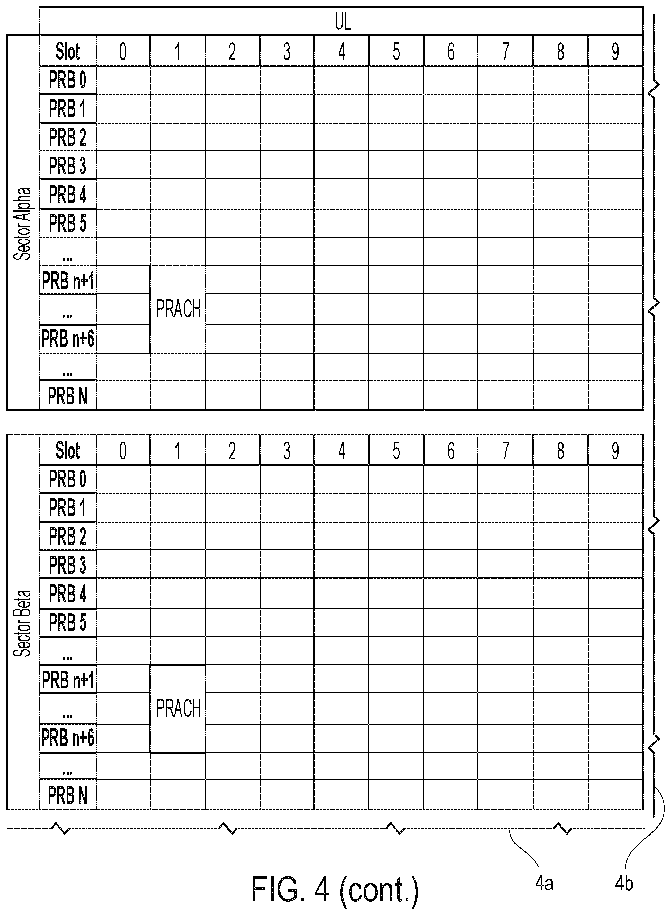

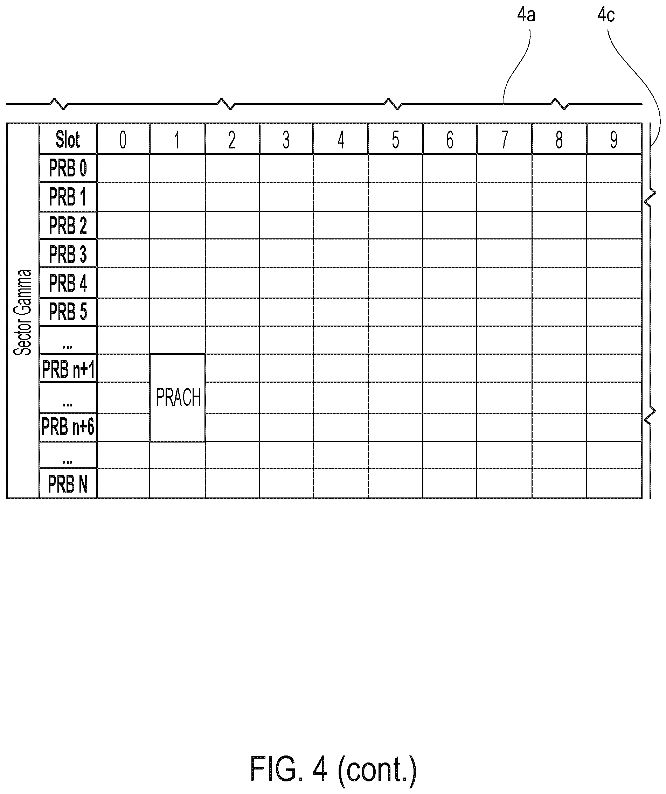

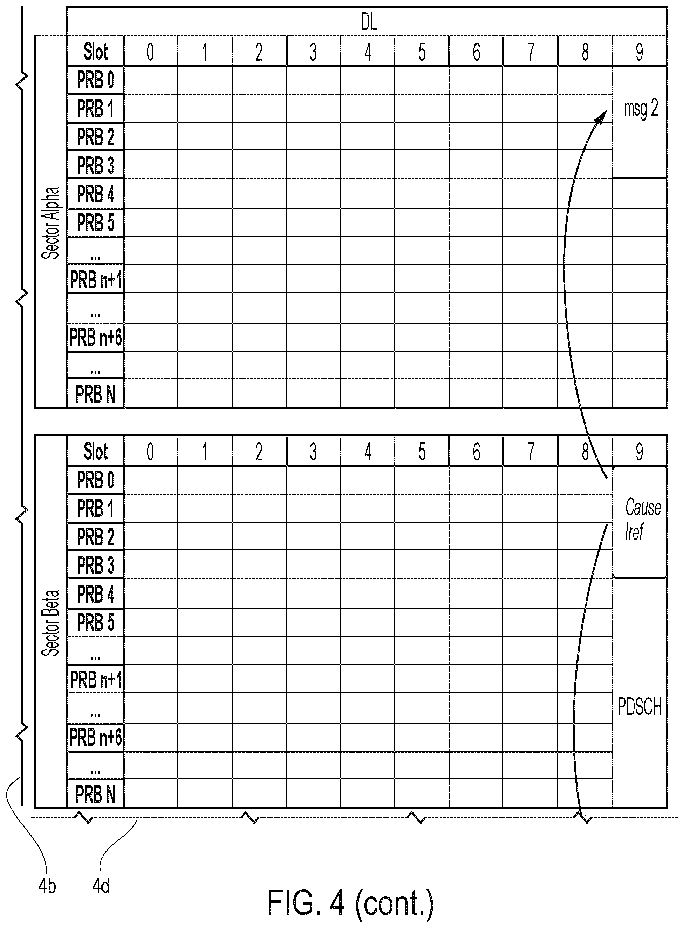

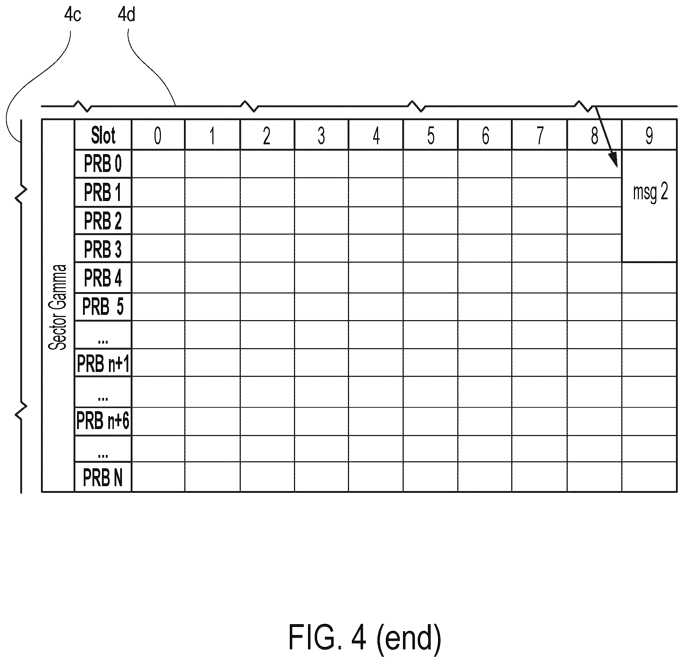

In terms of potential interference, it should be noted that msg2 will be transmitted only when there is a RACH from the UE, so collisions between two msg2 will not always occur, and there is more chance of msg2 colliding with the PDSCH in other sectors (of the same site or different sites), as seen in FIG.4. In the example illustrated in FIG. 4, it is assumed that Sector Beta does not have any msg2 to transmit (in DL), and Sector Beta can use the PRBs (including 0-3, among others) to transmit PDSCH, which can cause interference to msg2 of Sector Alpha and msg2 of Sector Gamma if these are transmitted.

In an example embodiment of a method according to the present disclosure, to prevent a sector (which term will be used interchangeably with "cell" in the present disclosure) from creating interference to PRACH message 2 transmitted by other sectors (of the same cell site or different cell sites), either from other msg2 or PDSCH of other data type, each sector is assigned a Downlink Interference Avoidance (DL IA) region which does not conflict with DL IA region of other sectors. The MAC layer shall determine the sector, e.g., by using the given sector's (cell's) sector Id (*sectorId*) parameter. If *sectorId* parameter is not available, the MAC layer shall use a modulo 3 operation (%3) on Physical Cell Identity (PCI) (the overall operation being referenced as "PCI%3" or "PCI modulo 3") to determine the sector, as shown below in Table 1. An example of using PCI%3 is as follows:
i) if PCI is 300 % 3 = 0, then the cell is a Sector Alpha (PCI modulo 3 sector 0);
ii) if PCI is 301 % 3 = 1, then the cell is a Sector Beta (PCI modulo 3 sector 1); and
iii) if PCI is 302 % 3 = 2, then the cell is a Sector Gamma (PCI modulo 3 sector 2).

**TABLE 1**

| Sector Name | sectorld | PCI modulo 3 |
|---|---|---|
| Alpha | 1 | 0 |
| Beta | 2 | 1 |
| Gamma | 3 | 2 |

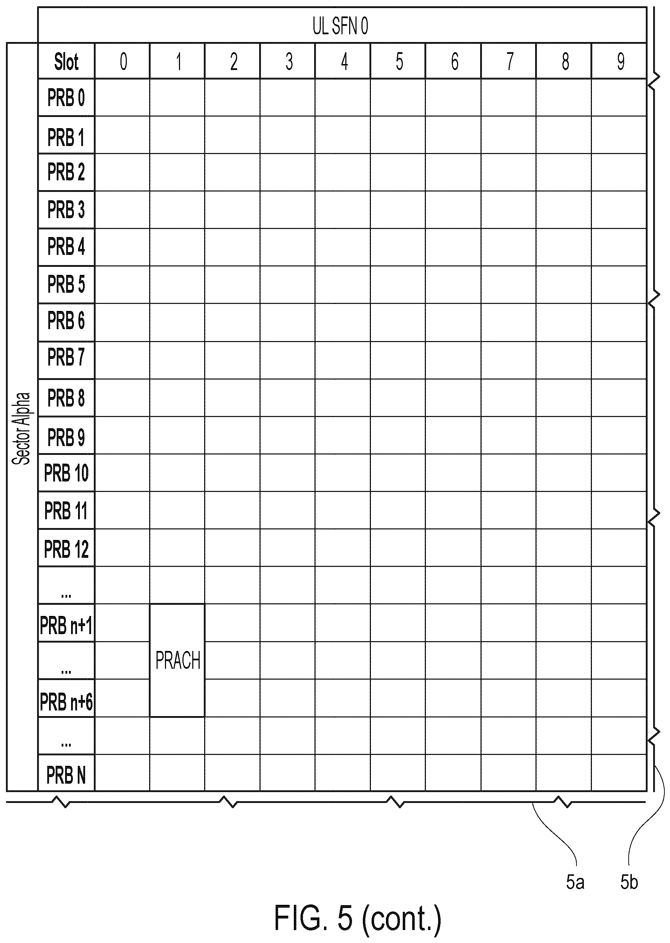

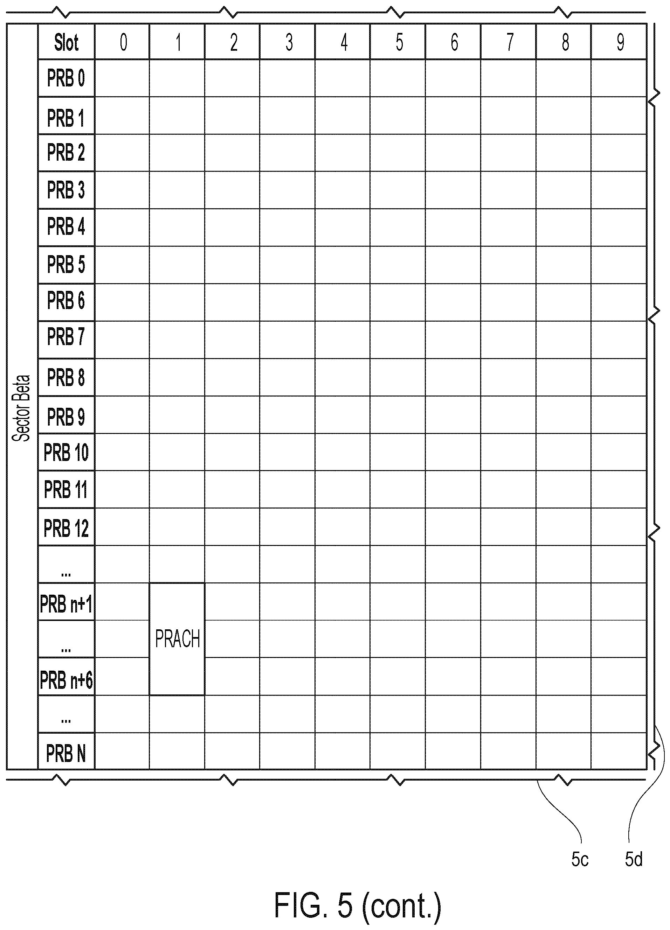

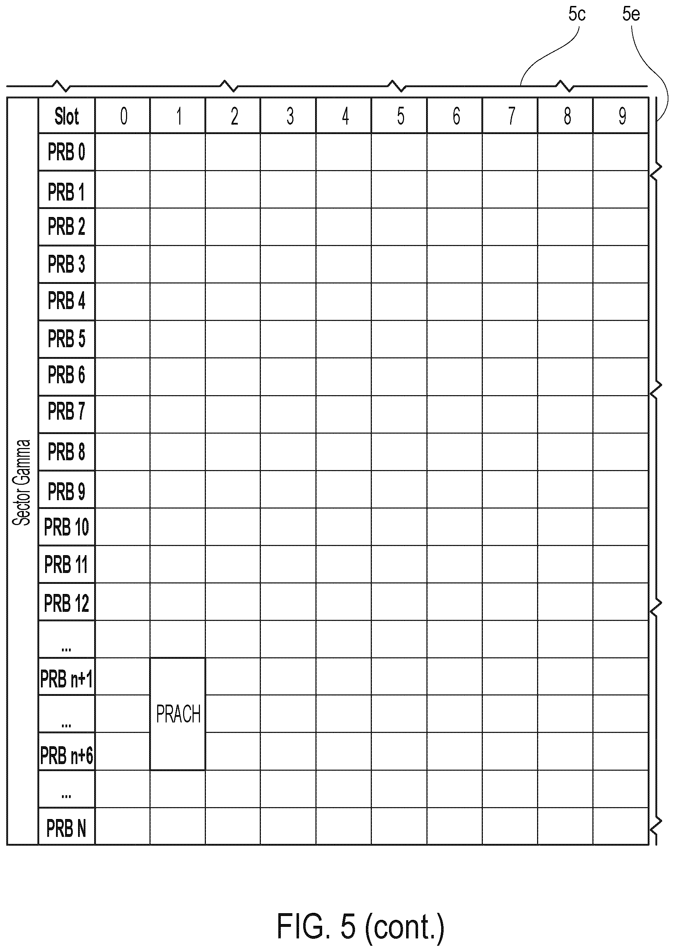

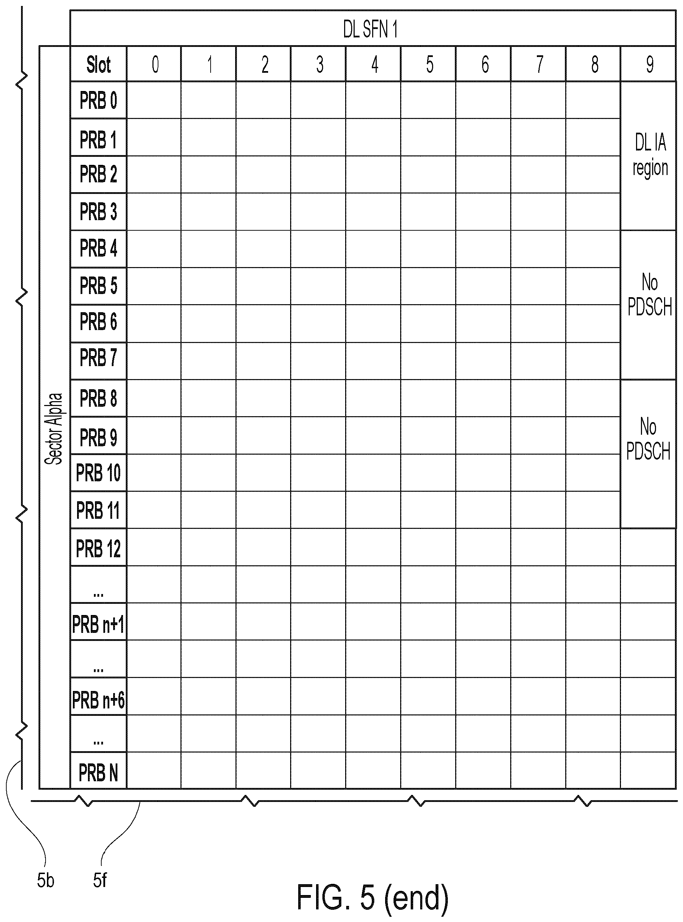

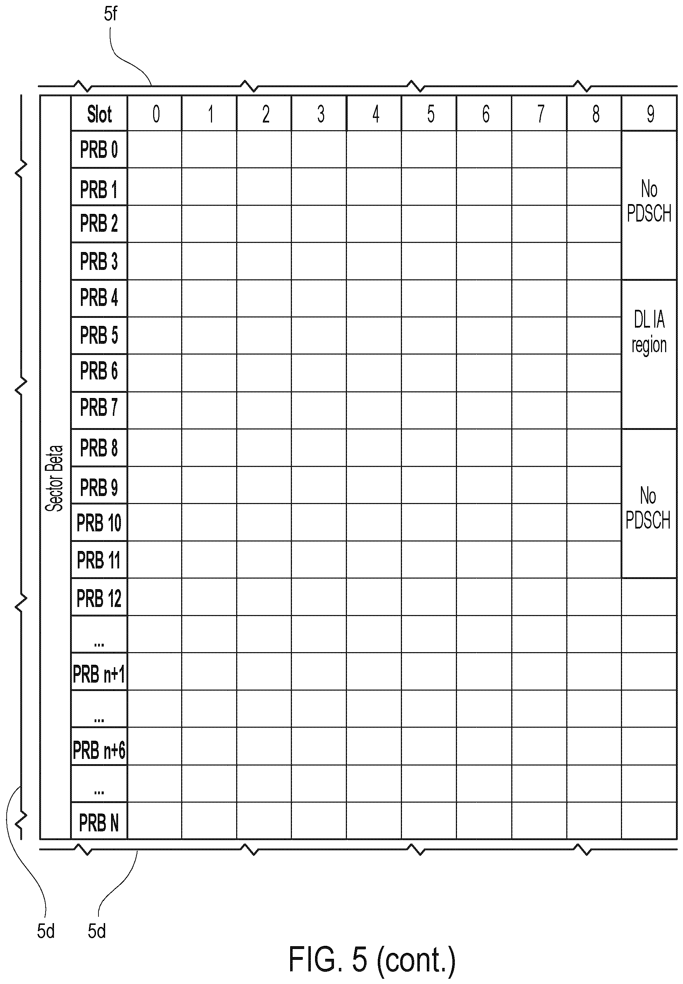

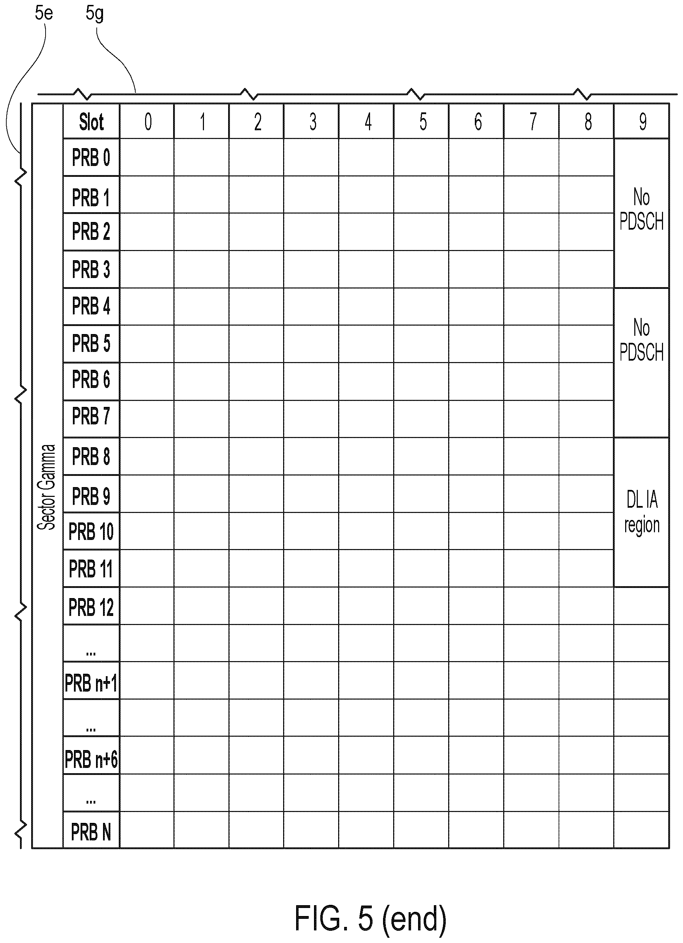

In an example embodiment of the method, the DL MAC Layer creates and assigns the Downlink Interference Avoidance (DL IA) region on a fixed slot and different PRB locations for each sector. As shown in FIG. 5, the DL IA region slot location is 8 slots after UL PRACH slot (which is shown on the left side of FIG. 5): i) Sector Alpha's DL IA region is in PRBs 0 to 3, in slot 9; ii) Sector Beta's DL IA region is in PRBs 4 to 7, in slot 9; and iii) Sector Gamma's DL IA region is in PRBs 8-11, in slot 9. These assigned PRB locations of various DL IA regions will be known to all sectors. In addition, these PRB locations for the DL IA regions are picked arbitrarily and can be set to any locations in the bandwidth as long as the DL IA regions do not overlap.

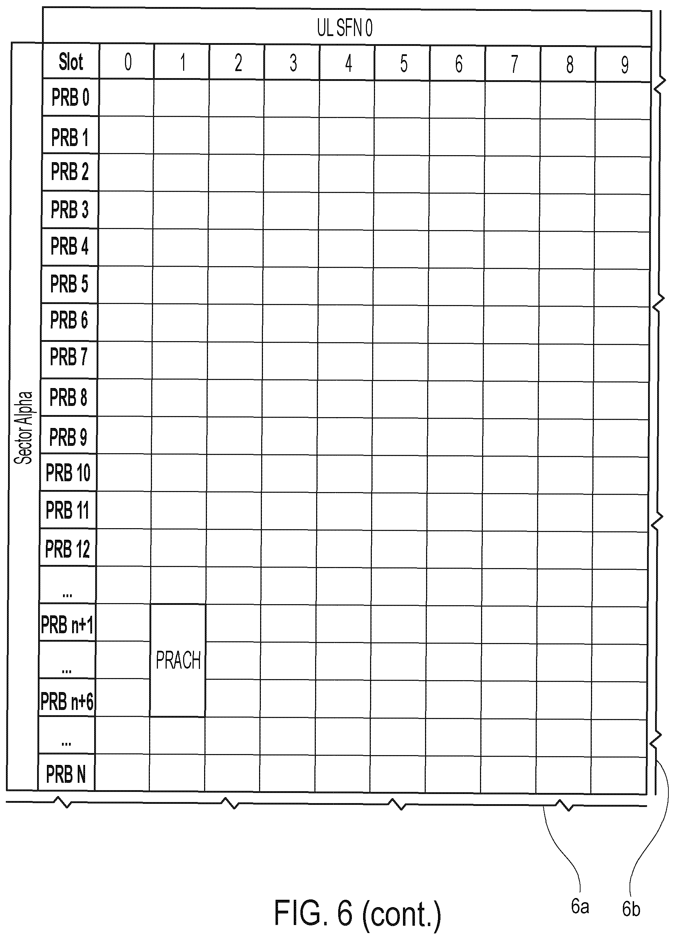

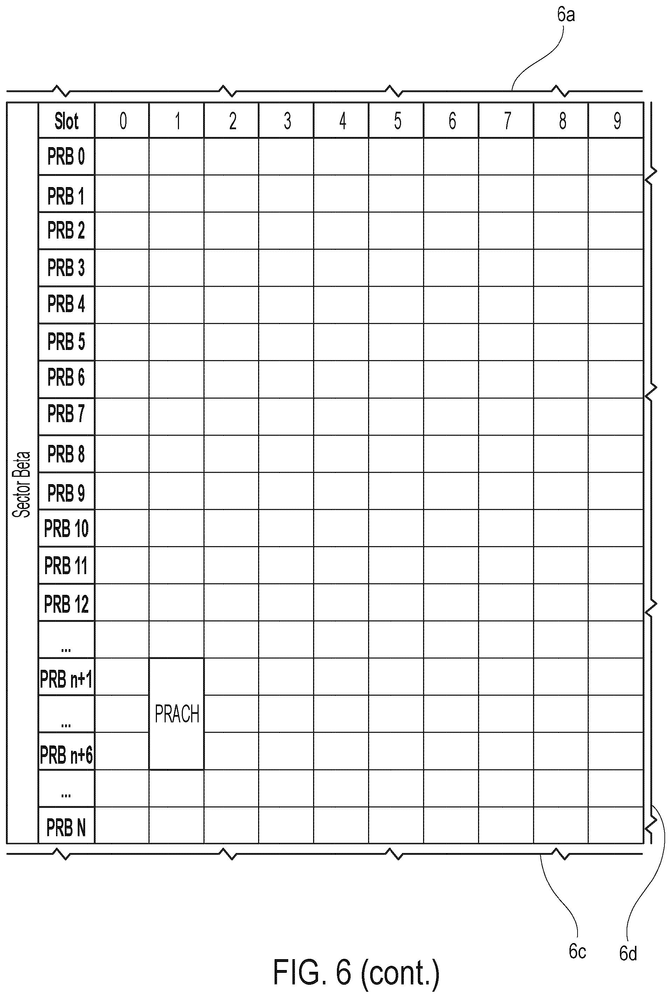

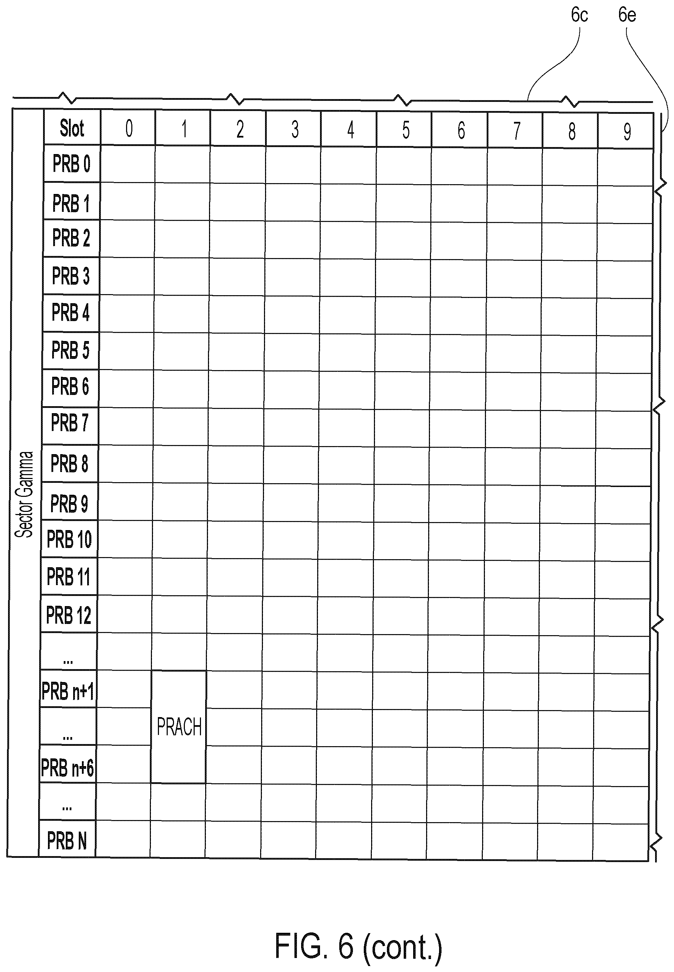

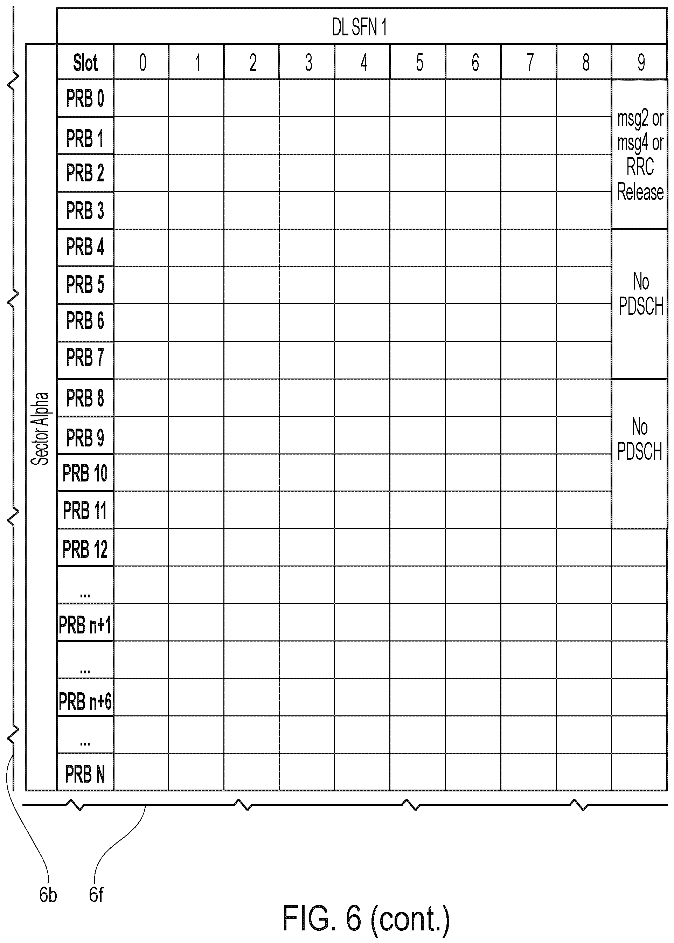

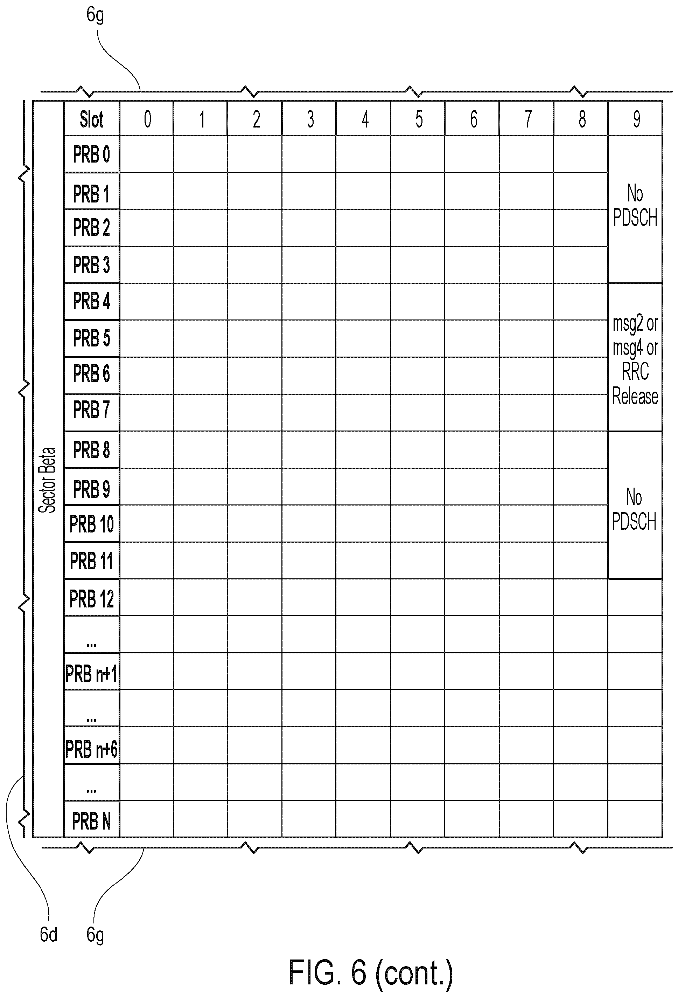

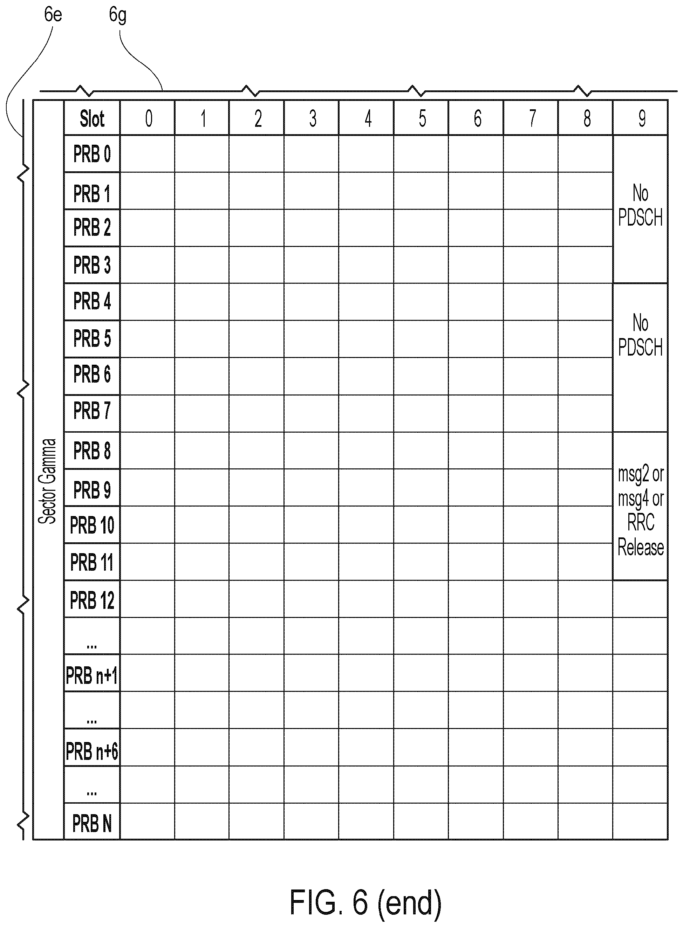

As shown in Fig. 6, the DL MAC Scheduler schedules transmission to the UE of msg2, msg4 or RRC Release in the assigned DL IA region for each sector (which DL IA regions for the different sectors do not overlap), in that priority order. For example, if msg2 is present in the assigned DL IA region for a given sector (e.g., PRBs 0-3 for Sector Alpha), then msg4 or RRC Release cannot be sent in that DL IA region, and msg4 or RRC Release can be transmitted in the next slot as a regular transmission. PRACH msg4 can only use the assigned DL IA region (e.g., PRBs 0-3 for Sector Alpha), if msg2 is not present. Similarly, RRC Release can be transmitted in the assigned DL IA region (e.g., PRBs 0-3 for Sector Alpha) only when msg2 and msg4 are not present in that DL IA region.

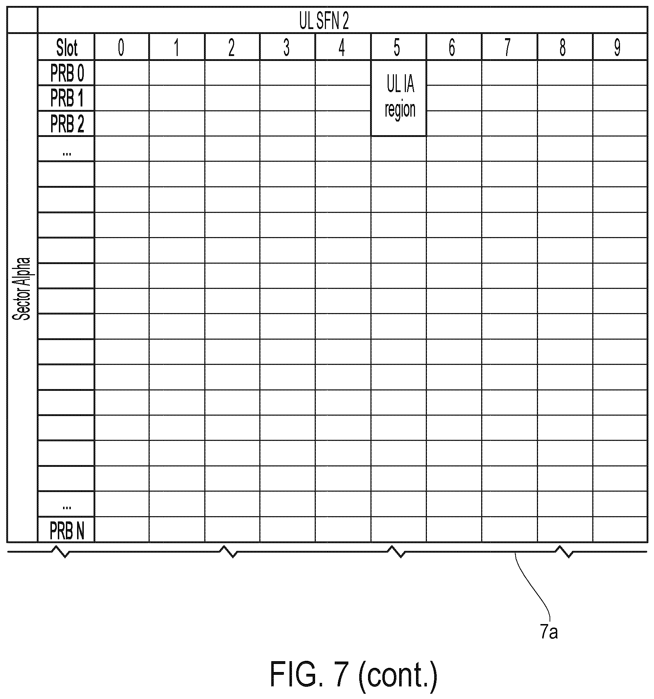

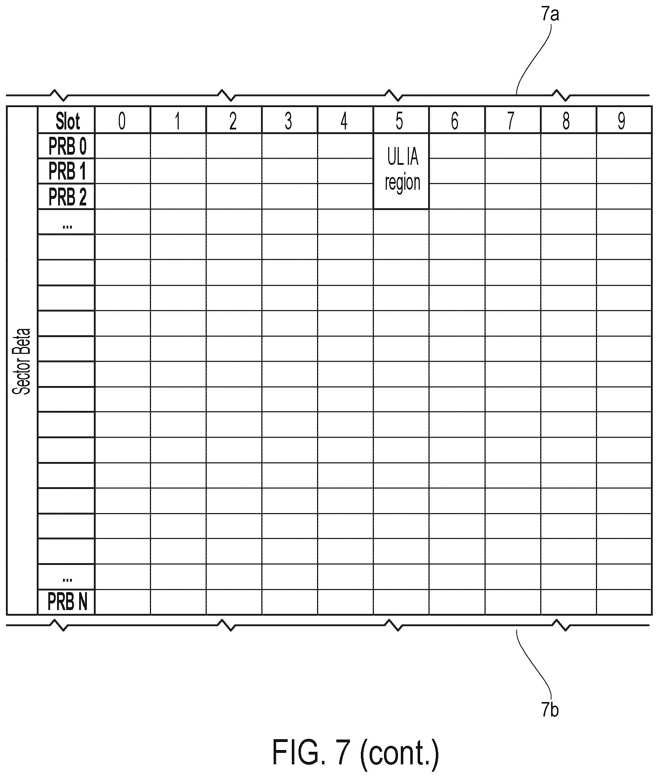

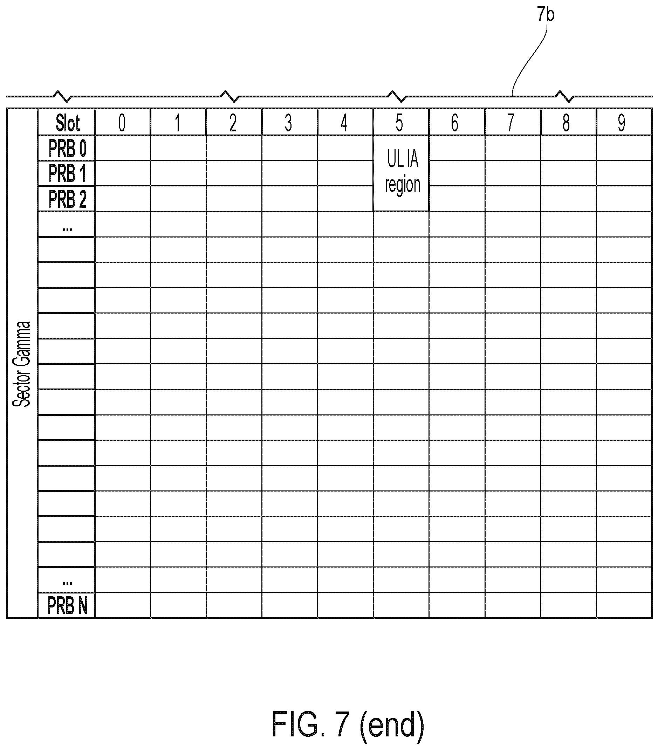

In the uplink (UL) direction, the UL MAC layer assigns a fixed slot and fixed PRB locations, called Uplink Interference Avoidance region (UL IA region), to each sector, as shown in FIG. 7. The UL IA region is located in slot 5, because it typically takes 6 ms after msg2 is sent for the UE to send msg3 back to the eNB/gNB. This slot location can be changed per UE device response. In an example embodiment, the slot and PRB locations can be the same for all sectors/cells, as shown in FIG. 7. The same PRB location is used to lower the cost of empty PRB, i.e., in terms of lowering UL peak UE throughput. In light to medium load conditions (which conditions can be defined by a specified threshold not being exceeded, e.g., in terms of UE access requests or other suitable metric), there would be few PRACH messages, and the probability of collisions involving msg3 from other sectors/cells would be low.

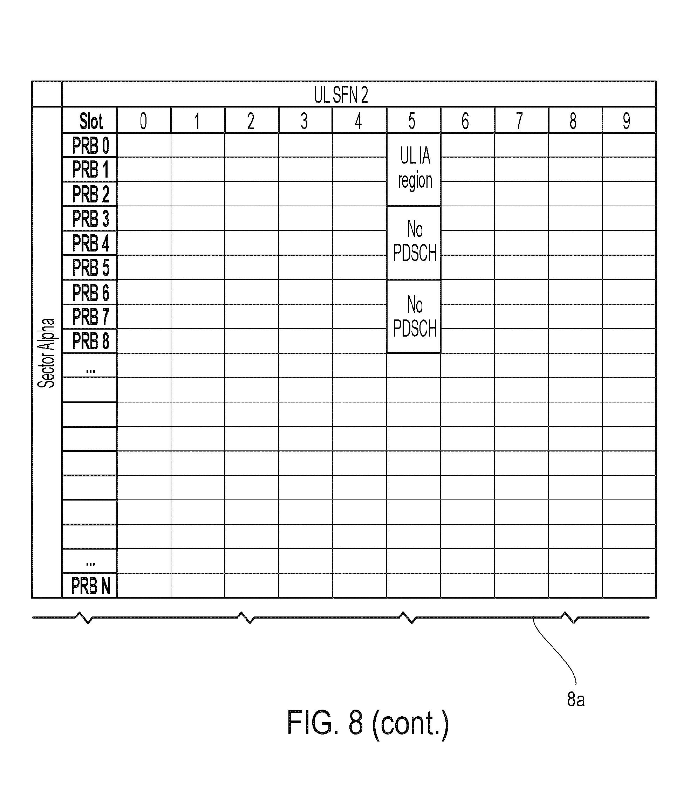

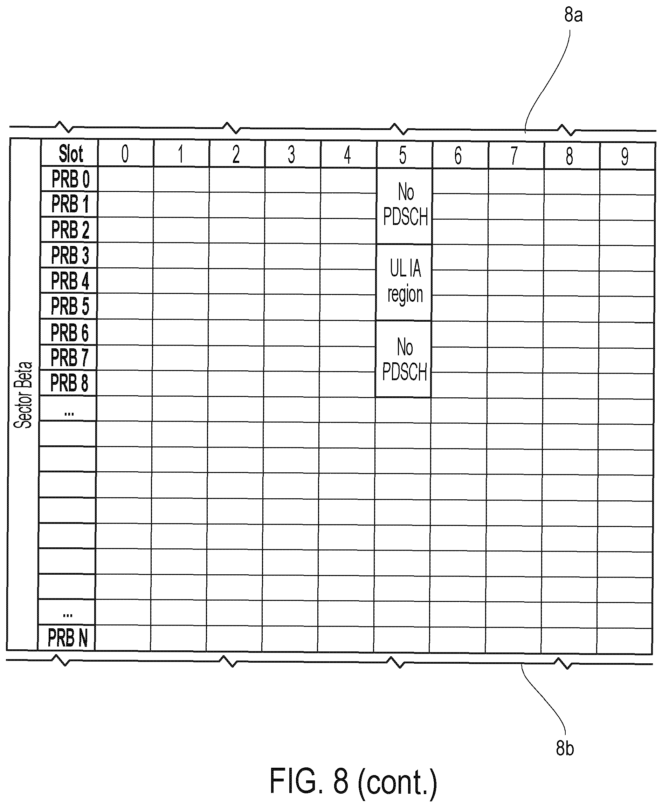

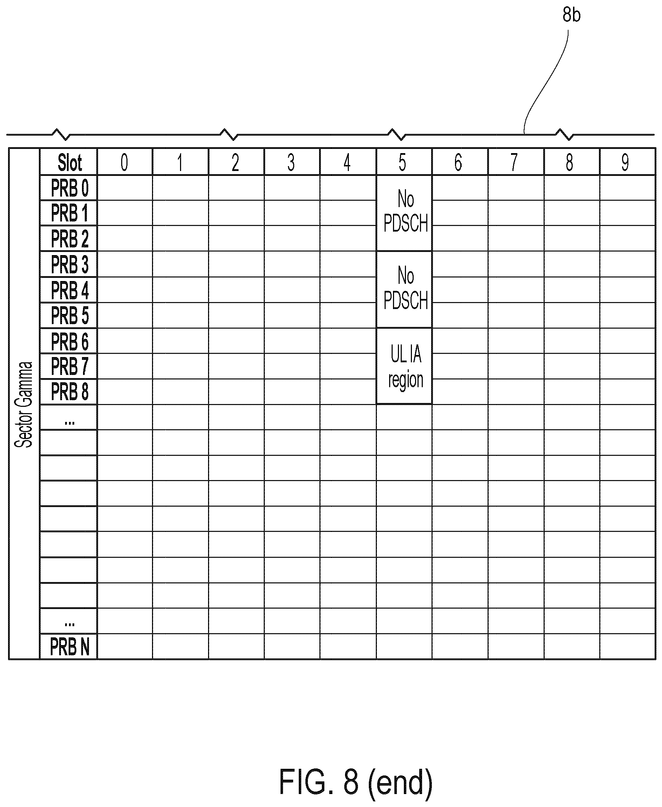

In an example embodiment, when the load condition is high (which condition can be defined by a specified threshold being exceeded, e.g., number of UEs attempting to access the RAN exceeds the threshold), the UL MAC layer can assign the UL IA regions in a manner similar to the assignment of the DL IA regions, i.e., in a fixed slot but different PRB locations for each sector, as shown in FIG. 8. In this example embodiment, the UL IA region for Sector Alpha is PRBs 0-2; the UL IA region for Sector Beta is PRBs 3-5; and the UL IA region for Sector Gamma is PRBs 6-8.

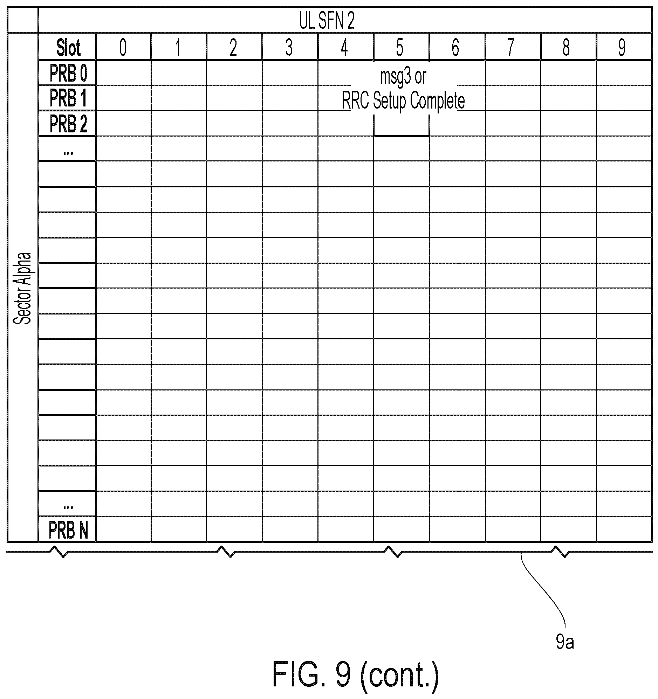

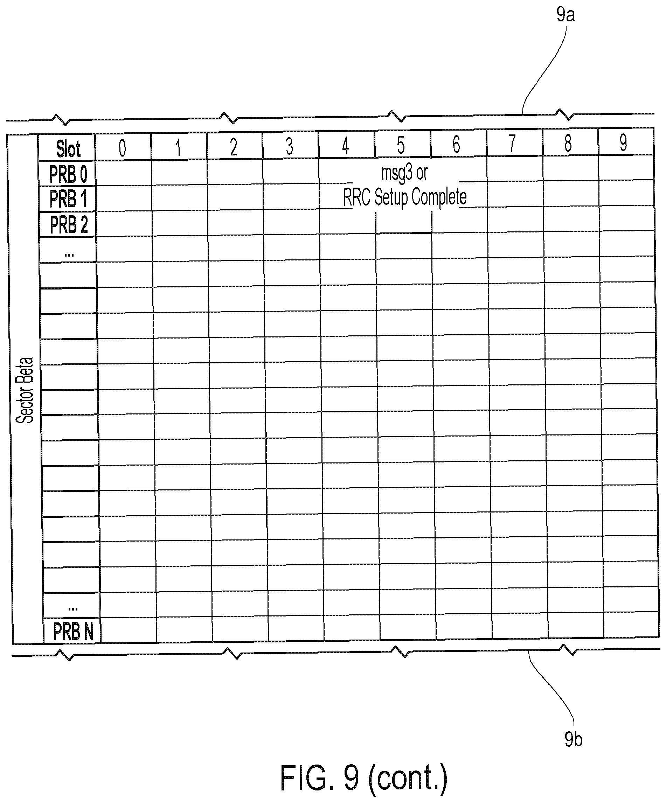

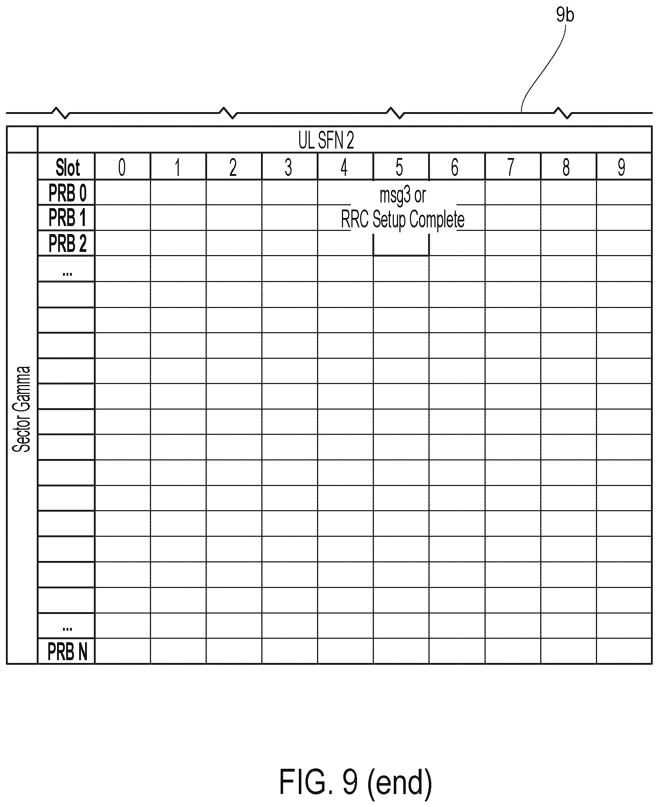

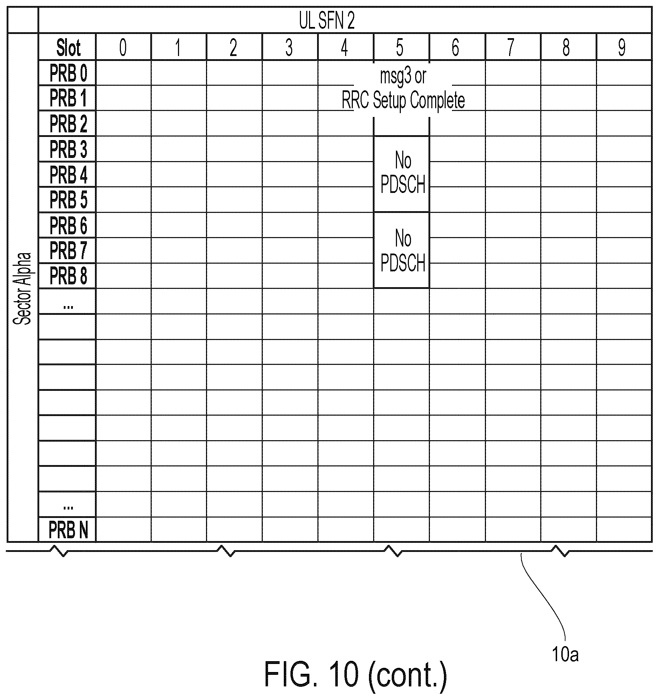

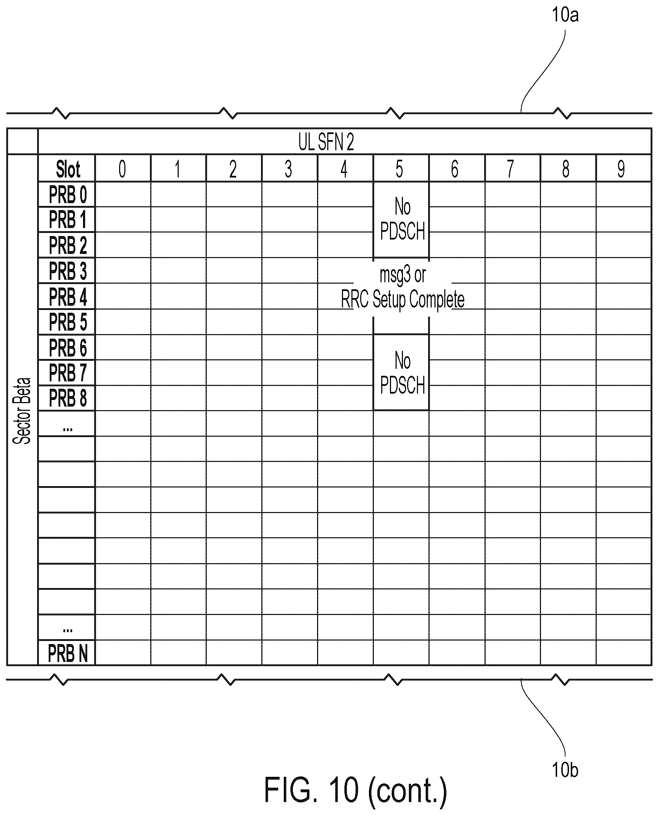

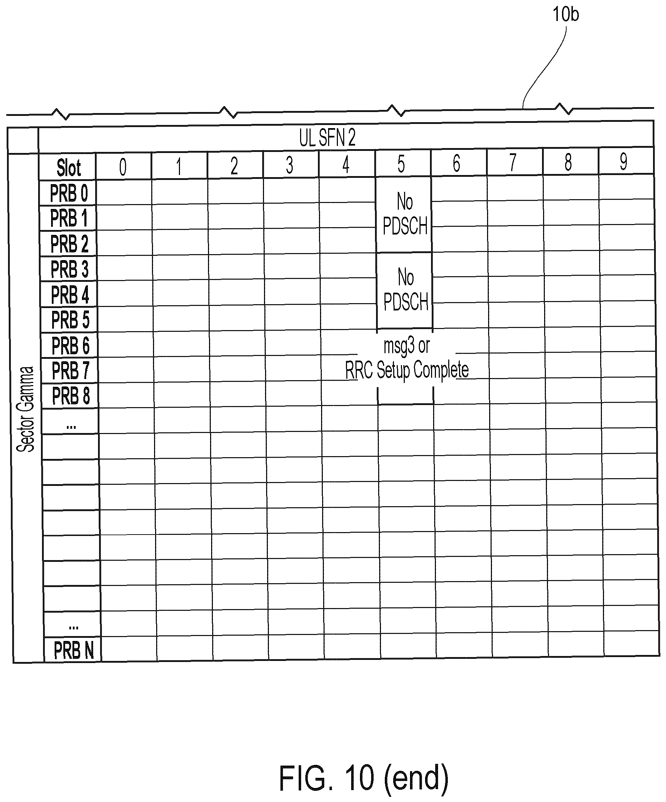

The UL MAC Scheduler of each sector does not allocate its PUSCH for other data traffic on the PRB's that overlap with UL IA region, thereby preventing interference from PUSCH. PRACH msg3 or RRC Setup Complete can be transmitted in the UL IA region, in that priority order, i.e., if msg3 is present, RRC Setup Complete cannot be sent in the UL IA region. FIG. 9 illustrates the transmission of msg3 or RRC Setup Complete in the UL IA region (which UL IA region is the same PRBs for each sector). FIG. 10 illustrates the transmission of msg3 or RRC Setup Complete in the UL IA regions when the load is high (e.g., when there are high number of UE's attempting to access the cell), for which example case the UL IA regions for the different sectors do not overlap.

Applying the example embodiments of the method according to the present disclosure, msg2, msg3, msg 4, RRC Setup Complete and/or RRC Release can be transmitted in a given sector while some other sectors stop transmission, thereby reducing the interference from other sectors/cells. At the cell edge among three sectors, the SINR can be expected to increase 2-3 dB by implementing the example embodiments of the method, in comparison to the SINR obtained using the conventional RA procedure.

In this section, cost considerations implicated in connection with the method according to the present disclosure will be discussed. According to an example embodiment, the following conditions are assumed: PRACH opportunities are on the same frequency and slot; and 10ms periodicity. For the DL, the cost can be defined in terms of single UE peak throughput degradation by not using 8 RBs every 10 ms. For 10MHz bandwidth (BW), there are 52 resource blocks (RBs), and in spel10ms there are 52*10 RBs. This example method requires to not use 8 RBs every 10ms, so the cost is 8/(52*10) = 3.2%. The cost summary for 5, 10 and 20 MHz BWs are shown in Table 2 below.

**TABLE 2**

| Bandwidth | Max number of PRB | Peak DL Throughput degradation |
|---|---|---|
| 5 MHz | 25 | 3.2% |
| 10 MHz | 52 | 1.5% |
| 20MHz | 106 | 0.8% |

As can be seen in Table 2 above, the cost associated with implementing the method according to the present disclosure is minimal. Moreover, if the cell PRB utilization is less than [100% - cost], i.e., for 5, 10 and 20 MHz bandwidth, [100% - 3.2% = 96.8%], [100% - 1.5% = 98.5%] and [100% - 0.8% = 99.2%], respectively, there will not be any throughput degradation at all if the DL Scheduler can schedule around the PRBs to be avoided. The UL cost can be computed in the similar way.

Although the example embodiments have been described in the context of a 3-sector configuration, the 3-sector configuration shown in the example embodiments is merely exemplary, and the present disclosure can be applied to any N-sector configuration, e.g., where N is 2, 4, 6, etc.

In addition, although DL IA regions' PRB locations have been described as being contiguous for the multiple sectors in the example embodiments, the DL IA regions' PRB locations do not need to be contiguous in all sectors. For example, Sector Alpha's DL IA region could be PRBs 0, 1, 2, and 3, but Sector Beta's DL IA region could be PRBs 10, 11, 12, and 13, and Sector Gamma's DL IA region could be PRBs 20, 21, 22, 23. As long as these DL IA regions are known to other sectors, the example method according to the present disclosure will be applicable, i.e., Sector Alpha will avoid transmitting PDSCH for data traffic in PRBs 10-13 and 20-23; Sector Beta will avoid PDSCH on PRBs 0-3 and 20-23; and Sector Gamma will avoid PDSCH on PRBs 0-3 and 10-13.

According to an example embodiment, power boosting can be applied to the message transmissions in the DL IA regions and the UL IA regions. When PRACH msg2 is sent in a DL IA region, the eNB/gNB does not transmit PDSCH in 8 PRBs, thereby saving power on those 8 PRBs. Instead, the saved power can be added (i.e., transfer the unused power from PRBs of the DL IA regions of other sectors) to the PRBs of the transmitting DL IA region, whereby the power used on msg2 can be 3 times (or 4.77 dB) more, thereby increasing the reliability of the msg2. Similarly, PRACH msg4 and RRC Release can be power boosted. The typical PRB sizes are 3 PRBs, so there are 12-3 = 9 PRBs that are not used, which means the power used on msg4 and RRC Release can be 4 times (or 6 dB) more.

The techniques described herein are exemplary and should not be construed as implying any limitation on the present disclosure. Various alternatives, combinations and modifications could be devised by those skilled in the art. For example, operations associated with the processes described herein can be performed in any order, unless otherwise specified or dictated by the operations themselves. The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

For the sake of completeness, the following list of acronyms is provided:

### Acronyms

- DL: Downlink
- eNB: evolved node B
- gNB: next generation node B
- LTE: Long Term Evolution (aka 4G)
- MAC: Media Access Control
- NBIOT: Narrowband Internet of Things
- NPRACH: NBIOT PRACH
- NR: New Radio, aka 5G
- ORAN: Open Radio Access Network
- PDCCH: physical downlink control channel
- PDCP: Packet Data Convergence Protocol
- PDSCH: Physical Downlink Shared Channel
- PRB: physical resource block
- PRACH: Physical random access channel
- PUSCH: Physical Uplink Shared Channel
- RACH: Random access channel
- RAN: Radio Access Network
- RB: resource block
- RAT: Radio access technology
- RE: Resource element
- RLC: Radio Link Control
- RRC: Radio Resource Control
- SINR: signal-to-interference-plus-noise ratio
- UE: user equipment

## Claims

1. A system for optimizing signal to interference plus noise ratio, SINR, of one of a 4G or 5G Radio Access Network, RAN, (109) including multiple cell sites each having multiple sectors, and at least one of the cell sites in communication with a user equipment, UE, (108) the system comprising:
i) a downlink, DL, medium access control, MAC, layer including a DL MAC Scheduler (105) configured to schedule at least one of Physical Random Access Channel, PRACH, message 2, PRACH message 4, Radio Resource Control, RRC, Release and Physical Downlink Shared Channel, PDSCH, of traffic, in each sector in at least one of frequency and time, in the downlink direction; and
ii) an uplink, UL, MAC layer including a UL MAC scheduler (105) configured to schedule at least one of PRACH message 3, RRC Setup Complete and Physical Uplink Shared Channel, PUSCH, of traffic, in each sector in at least one of frequency and time, in the uplink direction,
**characterized in that**, for a cell load condition below a specified threshold, the UL MAC layer is configured to assign a single UL interference avoidance, UL IA, region in physical resource blocks, PRBs, to all the sectors, and wherein the PRB location for the UL IA region is known to all the sectors.

2. The system according to claim 1, wherein the UL MAC Scheduler is configured to schedule PRACH message 3 or RRC Setup Complete in the UL IA region in that priority order.

3. The system according to claim 1, wherein the UL MAC Scheduler is configured not to schedule PDSCH for data in the UL IA region.

4. A method for optimizing signal to interference plus noise ratio, SINR, of one of a 4G or 5G Radio Access Network, RAN, (109) including multiple cell sites each having multiple sectors, and at least one of the cell sites in communication with a user equipment, UE, the method comprising the steps of:
i) configuring a downlink, DL, medium access control, MAC, layer including a DL MAC Scheduler (105) to schedule at least one of Physical Random Access Channel, PRACH, message 2, PRACH message 4, Radio Resource Control, RRC, Release and Physical Downlink Shared Channel, PDSCH, of traffic, in each sector in at least one of frequency and time, in the downlink direction; and
ii) configuring an uplink, UL, MAC layer including a UL MAC scheduler (105) to schedule at least one of PRACH message 3, RRC Setup Complete and Physical Uplink Shared Channel, PUSCH, of traffic, in each sector in at least one of frequency and time, in the uplink direction;
**characterized by** further comprising the step of assigning, by the UL MAC layer for a cell load
condition below a specified threshold, a single UL interference avoidance, UL IA, region in physical resource blocks, PRBs, to all the sectors, and wherein the PRB location for the UL IA region is known to all the sectors.

5. The method according to claim 4, wherein the UL MAC Scheduler schedules PRACH message 3 or RRC Setup Complete in the UL IA region in that priority order.

6. The method according to claim 4, wherein the UL MAC Scheduler does not schedule PDSCH for data in the UL IA region.

## Patentansprüche

1. System zur Optimierung des Signal-Interferenz-Rausch-Verhältnisses (SINR) eines 4G- oder 5G-Funkzugangsnetzes (RAN) (109), einschließlich mehrere Zellstandorte, die jeweils mehrere Sektoren aufweisen und mindestens einer der Zellstandorte in Verbindung mit einem Nutzergerät (UE) (108) steht, wobei das System Folgendes umfasst:
i) eine Downlink- (DL) MAC-Schicht (Medium Access Control), die einen DL-MAC-Scheduler (105) einschließt, der so konfiguriert ist, dass er mindestens eines von Physical Random Access Channel (PRACH)-Nachricht 2, PRACH-Nachricht 4, Radio Resource Control (RRC), Release und Physical Downlink-Shared-Channel (PDSCH) des Datenverkehrs in jedem Sektor in mindestens einem von Frequenz und Zeit in Downlink-Richtung plant; und
ii) eine Uplink-MAC-Schicht (UL), einschließlich eines UL-MAC-Schedulers (105), der so konfiguriert ist, dass er mindestens eines von PRACH-Nachricht 3, PRC Setup Complete und Physical Uplink-Shared-Channel (PUSCH) des Datenverkehrs in jedem Sektor in mindestens einem von Frequenz und Zeit in Uplink-Richtung plant, **dadurch gekennzeichnet, dass** bei einem Zelllastzustand unterhalb eines festgelegten Schwellenwerts die UL-MAC-Schicht so konfiguriert ist, dass sie allen Sektoren einen einzigen Bereich zur Vermeidung von UL-Interferenzen (UL IA) in den physikalischen Ressourcenblöcken (PRBs) zuweist, wobei die PRB-Position für den UL-IA-Bereich allen Sektoren bekannt ist.

2. System nach Anspruch 1, wobei der UL-MAC-Scheduler so konfiguriert ist, dass er die PRACH-Nachricht 3 oder RC Setup Complete im UL-IA-Bereich in dieser Prioritätsreihenfolge plant.

3. System nach Anspruch 1, wobei der UL-MAC-Scheduler so konfiguriert ist, dass er keine PDSCH für Daten im UL-IA-Bereich plant.

4. Verfahren zur Optimierung des Signal-Interferenz-Rausch-Verhältnisses (SINR) eines 4G- oder 5G-Funkzugangsnetzes (RAN) (109), das mehrere Zellstandorte einschließt, die jeweils mehrere Sektoren aufweisen und mindestens einer der Zellstandorte mit einem Nutzergerät (UE) in Verbindung steht, wobei das Verfahren die folgenden Schritte umfasst:
i) Konfigurieren einer Downlink- (DL) MAC-Schicht (Medium Access Control), die einen DL-MAC-Scheduler (105) einschließt, um mindestens eines von Physical Random Access Channel (PRACH)-Nachricht 2, PRACH-Nachricht 4, Radio Resource Control (RRC), Release und Physical Downlink-Shared-Channel (PDSCH) des Datenverkehrs in jedem Sektor in mindestens einem von Frequenz und Zeit in Downlink--Richtung zu planen; und
ii) Konfigurieren einer Uplink-MAC-Schicht (UL) einschließlich eines UL-MAC-Schedulers (105), um mindestens eines von PRACH-Nachricht 3, RRC Setup Complete und Physical Uplink Shared Channel (PUSCH) des Datenverkehrs in jedem Sektor in mindestens einem von Frequenz und Zeit in Uplink-Richtung zu planen;
**dadurch gekennzeichnet, dass** es ferner den Schritt umfasst, bei dem die UL-MAC-Schicht bei einem Zelllastzustand unterhalb eines festgelegten Schwellenwerts allen Sektoren einen einzigen Bereich zur Vermeidung von UL-Interferenzen (UL IA) in den physikalischen Ressourcenblöcken (PRBs) zuweist, wobei die PRB-Position für die UL-IA- Region allen Sektoren bekannt ist.

5. Verfahren nach Anspruch 4, wobei der UL-MAC-Scheduler die PRACH-Nachricht 3 oder RRC Setup Complete im UL-IA-Bereich in dieser Prioritätsreihenfolge plant.

6. Verfahren nach Anspruch 4, wobei der UL-MAC-Scheduler keine PDSCH für Daten im UL-IA-Bereich plant.

## Revendications

1. Système destiné à optimiser le rapport signal/interférence plus bruit, SINR, d'un parmi un réseau d'accès radio, RAN, 4G ou 5G (109) comprenant de multiples sites cellulaires, chacun comportant de multiples secteurs, et au moins un des sites cellulaires étant en communication avec un équipement utilisateur, UE (108), le système comprenant :
i) une couche de contrôle d'accès au support, MAC, de liaison descendante, DL, comprenant un planificateur MAC DL (105) configuré pour planifier au moins l'un parmi un message 2 de canal physique d'accès aléatoire, PRACH, un message 4 de PRACH, une libération de contrôle de ressources radio, RRC, et un canal physique partagé de liaison descendante, PDSCH, de trafic, dans chaque secteur, au moins dans l'un parmi la fréquence et le temps, dans la direction de liaison descendante ; et
ii) une couche MAC de liaison montante, UL, comprenant un planificateur MAC UL (105) configuré pour planifier au moins l'un parmi un message 3 PRACH, une configuration RRC terminée et un canal physique partagé de liaison montante, PUSCH, de trafic, dans chaque secteur, au moins selon l'un parmi la fréquence ou le temps, dans la direction de liaison montante,
**caractérisé en ce que**, pour une condition de charge cellulaire inférieure à un seuil spécifié, la couche MAC UL est configurée pour attribuer une seule région d'évitement d'interférence UL, IA UL, dans les blocs de ressources physiques, PRB, à tous les secteurs, et dans lequel l'emplacement de PRB correspondant à la région IA UL est connu de tous les secteurs.

2. Système selon la revendication 1, dans lequel le planificateur MAC UL est configuré pour planifier le message 3 PRACH ou la configuration RRC terminée dans la région IA UL selon cet ordre de priorité.

3. Système selon la revendication 1, dans lequel le planificateur MAC UL est configuré pour ne pas planifier de PDSCH pour des données situées dans la région IA UL.

4. Procédé d'optimisation du rapport signal/interférence plus bruit, SINR, d'un parmi un réseau d'accès radio, RAN, 4G ou 5G (109) comprenant de multiples sites cellulaires, chacun comportant de multiples secteurs, et au moins un des sites cellulaires étant en communication avec un équipement utilisateur, UE, le procédé comprenant les étapes suivantes :
i) la configuration d'une couche de contrôle d'accès au support, MAC, de liaison descendante, DL, comprenant un planificateur MAC DL (105) pour planifier au moins l'un parmi un message 2 de canal physique d'accès aléatoire, PRACH, un message 4 de PRACH, une libération de contrôle de ressources radio, RRC, et un canal physique partagé de liaison descendante, PDSCH, de trafic, dans chaque secteur, au moins dans l'un parmi la fréquence et le temps, dans la direction de liaison descendante ; et
ii) la configuration d'une couche MAC de liaison montante, UL, comprenant un planificateur MAC UL (105) pour planifier au moins l'un parmi un message 3 PRACH, une configuration RRC terminée et un canal physique partagé de liaison montante, PUSCH, de trafic, dans chaque secteur, au moins selon l'un parmi la fréquence ou le temps, dans la direction de liaison montante,
**caractérisé en ce qu'**il comprend en outre l'étape d'attribution, par la couche MAC UL pour une condition de charge de cellule inférieure à un seuil spécifié, une seule région d'évitement d'interférences UL, IA UL, dans les blocs de ressources physiques, PRB, à tous les secteurs, et dans lequel l'emplacement de PRB pour la région IA UL est connu de tous les secteurs.

5. Procédé selon la revendication 4, dans lequel le planificateur MAC UL planifie le message 3 PRACH ou la configuration RRC terminée dans la région IA UL selon cet ordre de priorité.

6. Procédé selon la revendication 4, dans lequel le planificateur MAC UL ne planifie pas de PDSCH pour des données situées dans la région IA UL.
